# DEMANDE DE BREVET EUROPEEN

(11) **EP 0 849 119 A1**
(43) Date de publication de la demande: **24.06.1998**
(21) Numéro de dépôt: 97402393.9
(22) Date de dépôt: 10.10.1997
(51) Int. Cl.: B60R 7/04, B60R 21/06, B60N 2/36

(54) **Agencement pefectionné d'un siège notamment une banquette arrière, dans un habitacle de véhicule automobile**

(30) Priorité: 20.12.1996 FR 9615782
(71) Demandeur: ECIA - EQUIPEMENTS ET COMPOSANTS POUR L'INDUSTRIE AUTOMOBILE, F-25400 Audincourt (FR)
(72) Inventeur: Fourrey, Francois, 45290 Nogent Sur Vernisson (FR)
(74) Mandataire: Moncheny, Michel

(57) **Abrégé**

Le siège comporte un dossier (16) monté articulé dans l'habitacle. Ce dossier (16) est déplaçable entre une première position dressée sensiblement verticalement d'utilisation du siège, dans laquelle ce dossier forme une séparation entre un coffre du véhicule et un espace habitable de ce véhicule, et une seconde position rabattue sensiblement horizontalement d'augmentation du volume du coffre. Le dossier (16) comporte une barrière (28) de retenue d'une charge placée dans le coffre. La barrière (28) est déplaçable, lorsque le dossier (16) est rabattu, entre une position active de retenue d'une charge, vers laquelle cette barrière est rappelée élastiquement, et une position escamotée par recouvrement par une charge.

## Description

La présente invention concerne un agencement perfectionné d'un siège, notamment une banquette arrière, dans un habitacle d'un véhicule automobile.

L'invention s'applique en particulier à la retenue de charges, telles que des bagages, dans un coffre de véhicule automobile.

On connaît déjà dans l'état de la technique un agencement d'un siège dans un habitacle de véhicule automobile, le siège comportant un dossier monté articulé dans l'habitacle autour d'un axe sensiblement horizontal et transversal au siège, le dossier étant déplaçable entre une première position dressée sensiblement verticalement d'utilisation du siège, dans laquelle ce dossier forme une séparation entre un coffre du véhicule et un espace habitable de ce véhicule, et une seconde position rabattue sensiblement horizontalement d'augmentation du volume du coffre.

Un agencement de ce type est décrit par exemple dans FR-A-2 714 342 (FR-A-93 15 599).

Lorsque le dossier est rabattu, en cas de freinage brusque ou de choc frontal du véhicule, les charges placées dans le coffre sont susceptibles d'être projetées violemment contre les sièges avant, et risquent ainsi d'endommager ces sièges et de blesser leurs occupants.

Ce risque est d'autant plus important que les charges sont susceptibles de se déplacer sur des distances relativement importantes dans le coffre dont le volume a été augmenté par rabattement du dossier.

L'invention a pour but de proposer des moyens simples et peu coûteux de retenue de charges dans un coffre dont le volume a été augmenté par rabattement du dossier d'un siège formant banquette arrière.

A cet effet, l'invention a pour objet un agencement d'un siège dans un habitacle de véhicule automobile, du type précité, caractérisé en ce que le dossier comporte une barrière de retenue d'une charge placée dans le coffre, cette barrière étant déplaçable, lorsque le dossier est rabattu, entre une position active de retenue d'une charge, vers laquelle cette barrière est rappelée élastiquement, et une position escamotée par recouvrement par une charge.

Suivant des caractéristiques de différents modes de réalisation de l'invention :
- lorsque le dossier est dressé, la barrière est maintenue en position escamotée par appui contre une tablette délimitant le dessus du coffre ou contre une butée solidaire de la caisse du véhicule ;
- la barrière comporte un arceau muni d'une âme de retenue de charge et de deux branches articulées, autour d'un axe sensiblement horizontal et transversal au dossier, sur une face du dossier qui, lorsque ce dossier est rabattu, forme un plancher de chargement du coffre, l'arceau étant, en position active, érigé par rapport au dossier, et, en position escamotée, plaqué contre ce dossier ;
- les extrémités libres des branches de l'arceau sont pliées de manière à former des tourillons articulés dans des paliers portés par une plaque d'armature du dossier ;
- le tourillon d'une première branche de l'arceau est prolongé par un crochet d'accrochage d'un ressort de rappel de l'arceau en position active, et le tourillon de la seconde branche de l'arceau est prolongé par une butée de position active de l'arceau coopérant avec une butée complémentaire de la plaque d'armature, le crochet, le ressort et la butée de position active s'étendant sous une face interne de la plaque d'armature;
- en considérant le dossier dans sa position dressée, l'arceau est articulé sensiblement à mi-hauteur de ce dossier et est rappelé élastiquement vers le bas du dossier, et en considérant le dossier dans sa position rabattue, les branches de l'arceau érigé sont inclinées suivant une pente montante vers l'avant du véhicule;
- en considérant le dossier dans sa position dressée, l'arceau est articulé sensiblement en haut du dossier et est rappelé élastiquement vers le haut de ce dossier, et en considérant le dossier dans sa position rabattue, les branches de l'arceau érigé sont sensiblement verticales ;
- la barrière comporte de plus au moins un pan en matériau souple ou pliable, accroché sur l'arceau et le dossier, de manière que, lorsque l'arceau est érigé, la barrière forme une cage de retenue de charge;
- l'arceau est constitué par une tige métallique pliée.

L'invention sera mieux comprise à la lecture de la description qui va suivre donnée uniquement à titre d'exemple et faite en se référant aux dessins dans lesquels:
- la figure 1 est une vue en élévation d'une banquette arrière d'un véhicule automobile, agencée, selon un premier mode de réalisation de l'invention, dans l'habitacle du véhicule, le dossier de la banquette étant dans une position sensiblement verticale ;
- la figure 2 est une vue en perspective du dossier de la banquette représentée à la figure 1, dans une position sensiblement horizontale, la barrière étant en position active de retenue d'une charge ;
- la figure 3 est une vue de face du dossier représenté à la figure 2 ;
- la figure 4 est une vue similaire à la figure 3, la barrière étant en position escamotée par recouvrement par une charge ;
- la figure 5 est une vue de dessus du dossier représenté à la figure 2 ;
- les figures 6 et 7 sont des vues de détail, à échelle agrandie, en coupe suivant la ligne 6-6 de la figure 5, représentant respectivement la barrière en position active et escamotée;
- les figures 8 et 9 sont des vues de détail, à échelle agrandie, en coupe suivant la ligne 8-8, représentant respectivement la barrière en position active et escamotée ;
- la figure 10 est une vue similaire à la figure 2 montrant une variante de réalisation de la barrière de retenue de charge ;
- la figure 11 est une vue similaire à la figure 2 montrant un dossier de siège agencé, selon un second mode de réalisation de l'invention, dans l'habitacle du véhicule.

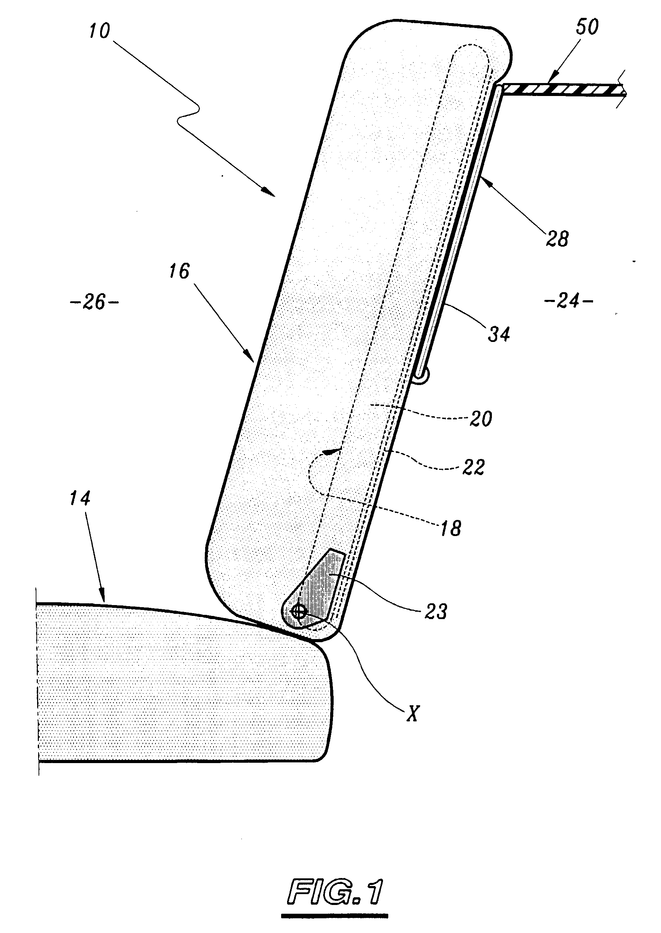

On a représenté sur la figure 1 une banquette arrière 10 agencée, selon un premier mode de réalisation de l'invention, dans un habitacle 12 de véhicule automobile.

Dans ce qui suit, les orientations avant, arrière, droite et gauche correspondent aux orientations habituelles d'un occupant assis dans la banquette 10.

De façon classique, la banquette 10 comporte une assise 14 et un dossier 16. Ce dossier 16 est monté articulé dans l'habitacle autour d'un axe X sensiblement horizontal et transversal au siège.

Le dossier 16 comporte une armature 18 munie d'un cadre tubulaire 20 et d'une plaque 22 dont les bords sont fixés de façon connue en soi sur le contour du cadre 20.

Le dossier 16 comporte également deux flasques latéraux 23 d'articulation de ce dossier autour de l'axe X. Les flasques 23 sont solidaires de l'armature 18.

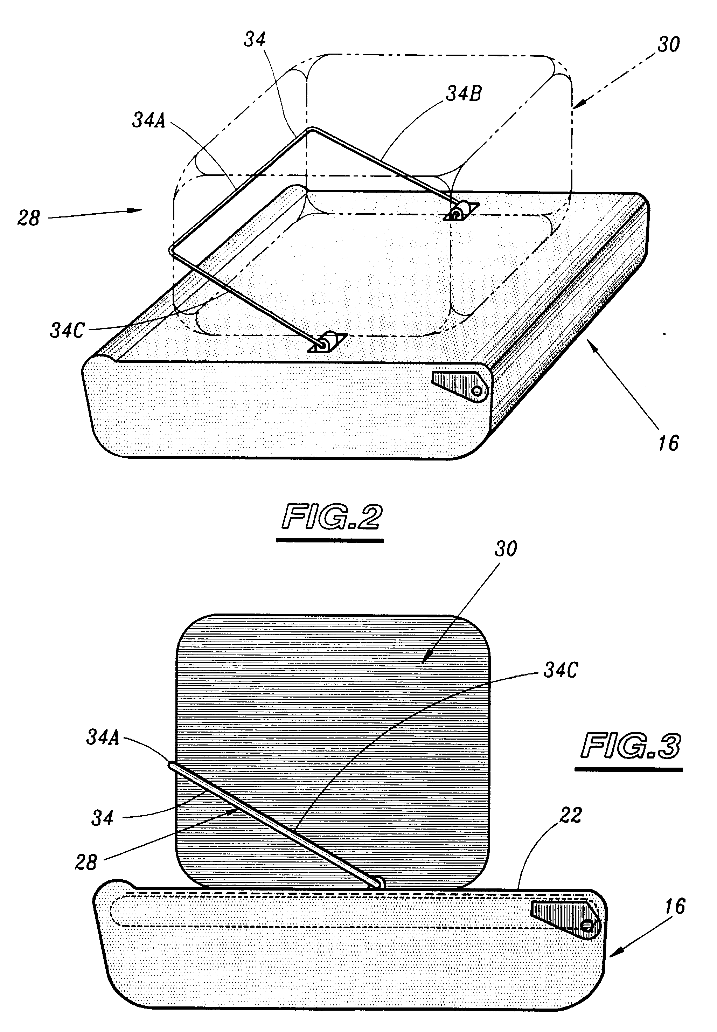

Le dossier 16 est déplaçable entre, d'une part, une première position dressée sensiblement verticalement d'utilisation de la banquette, dans laquelle ce dossier forme une séparation entre un coffre 24 du véhicule et un espace habitable 26 de ce véhicule, comme cela est représenté sur la figure 1, et d'autre part, une seconde position rabattue sensiblement horizontalement d'augmentation du volume du coffre 24, comme cela est représenté notamment sur les figures 2 à 5.

On notera que la plaque 22 d'armature délimite, lorsque le dossier 16 est dressé, une face arrière de ce dossier, et, lorsque le dossier 16 est rabattu, un plancher de chargement du coffre.

Le dossier 16 comporte une barrière 28 de retenue d'une charge 30 placée dans le coffre dont le volume a été augmenté par rabattement de ce dossier. Cette barrière 28 n'est opérationnelle que lorsque le dossier 16 est rabattu.

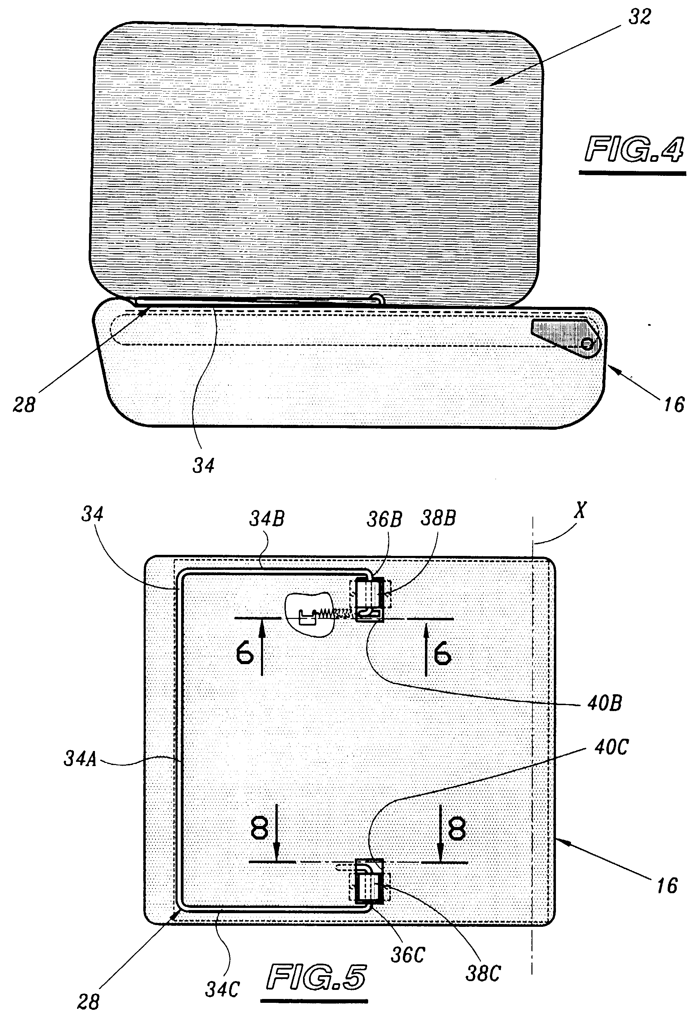

La barrière 28 est déplaçable, lorsque le dossier 16 est rabattu, entre une position active de retenue d'une charge 30 de dimensions appropriées, comme cela est représenté sur la figure 3, et une position escamotée par recouvrement par une charge 32 de dimensions appropriées, comme cela est représenté sur la figure 4.

La barrière 28 est rappelée élastiquement vers sa position active, par des moyens qui seront décrits ultérieurement.

De préférence, la barrière 28 comporte un arceau 34, en forme générale de U, muni d'une âme 34A de retenue de charge et de deux branches droite 34B et gauche 34C montées articulées, autour d'un axe sensiblement parallèle à l'axe X, sur la plaque 22 d'armature.

L'arceau 34 est, en position active, érigé par rapport au dossier 16, et en position escamotée, plaqué contre ce dossier 16.

Dans l'exemple illustré, l'arceau 34 est constitué par une tige métallique pliée.

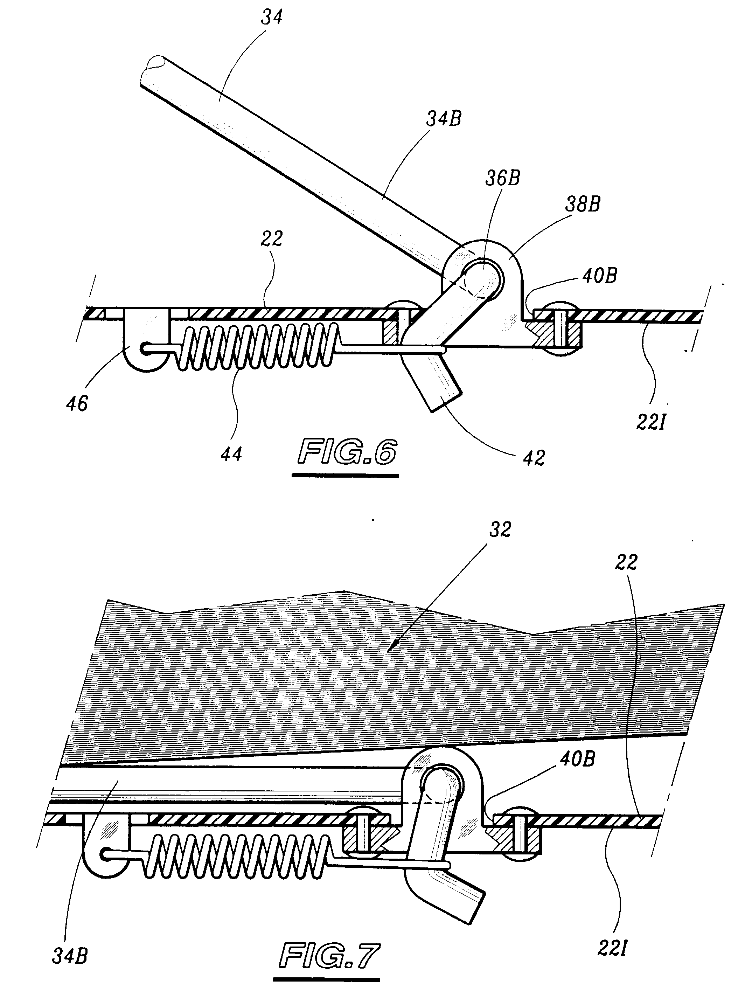

Les extrémités libres des branches 34B,34C de l'arceau sont pliées de manière à former des tourillons 36B,36C sensiblement transversaux articulés dans des paliers 38B,38C portés par la plaque 22 d'armature, comme est représenté notamment sur la figure 5.

Les paliers 38B,38C sont fixés sur la plaque 22 d'armature, par exemple par rivetage, au droit d'ouvertures 40B,40C de cette plaque 22.

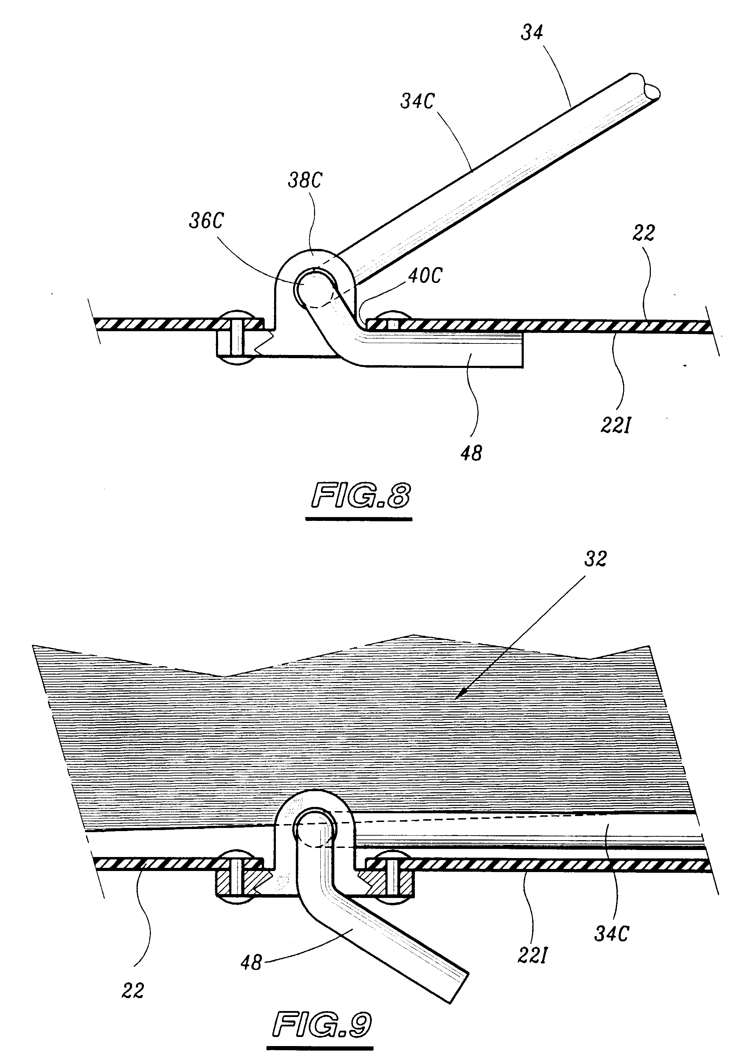

En se référant plus particulièrement aux figures 6 et 7, on voit que le tourillon 36B de la branche droite 34B de l'arceau est prolongé, à travers l'ouverture 40B correspondante, par un crochet 42 d'accrochage d'une extrémité (mobile) d'un ressort 44 de rappel de l'arceau 34 en position active.

L'autre extrémité (fixe) du ressort 44 est accrochée sur une patte 46 solidaire de la plaque 22 d'armature.

En se référant plus particulièrement aux figures 8 et 9, on voit que le tourillon 36C de la branche gauche 34C de l'arceau est prolongé, à travers l'ouverture 40C correspondante, par une butée 48 de position active de l'arceau 34 coopérant avec une portion de la face interne 22I de la plaque d'armature, formant butée complémentaire.

On notera que le crochet 42, le ressort 44 et la butée de position active 48 s'étendent sous la face interne 22I de la plaque d'armature.

On notera également, en considérant le dossier 16 dressé, que les paliers 38B,38C d'articulation de l'arceau 34 sont disposés sensiblement à mi-hauteur de ce dossier, le ressort 44 rappelant élastiquement l'arceau 34 vers le bas du dossier.

En considérant toujours le dossier 16 dressé, on notera encore que l'arceau 34 est maintenu en position escamotée par appui contre le bord avant d'une tablette 50 sensiblement horizontale, délimitant le dessus du coffre 24, comme cela est représenté sur la figure 1. En variante, l'arceau 34 peut être maintenu en position escamotée par appui contre au moins une butée solidaire de la caisse du véhicule.

La butée 48 de l'arceau 34 permet de placer ce dernier, lorsque le dossier 16 est rabattu, dans une position érigée telle que les branches 34B,34C de cet arceau soient inclinées suivant une pente montante vers l'avant du véhicule, s'étendant depuis les tourillons 36B,36C jusqu'à l'âme 34A de l'arceau.

L'agencement selon l'invention permet une manipulation simple du dossier 16 et de la barrière 28.

Initialement le dossier 16 est dressé, comme cela est représenté sur la figure 1. La tablette 50 maintient l'arceau 34 plaqué contre la plaque 22 d'armature du dossier.

Pour augmenter le volume du coffre 24, l'utilisateur rabat le dossier 16 pour le placer dans une position sensiblement horizontale, dans laquelle la plaque 22 d'armature du dossier forme un plancher de chargement, comme cela est représenté notamment sur la figure 2. La barrière 28 est rappelée automatiquement en position active.

Sur la figure 3, on a représenté une charge 30 dont les dimensions permettent de placer celle-ci entre les branches 34B,34C de l'arceau, de manière que cette charge soit retenue, vers l'avant du véhicule, par l'âme 34A de l'arceau.

Ainsi, en cas de freinage brusque ou de choc frontal, l'arceau 34 empêche ou arrête tout déplacement de la charge 30 par inertie, vers l'avant du véhicule.

Sur la figure 4, on a représenté une charge 32 dont les dimensions permettent à celle-ci de recouvrir totalement l'arceau 34 et de maintenir ce dernier plaqué contre le dossier 16.

En cas de freinage brusque ou de choc frontal, les dimensions de la charge 32 étant relativement importantes par rapport au volume du coffre 24, cette charge se déplacera très peu ou pas du tout dans le coffre 24, sans risque notable d'endommager les sièges avant de l'habitacle ou de blesser leurs occupants.

On comprend donc que l'arceau 34 permet de retenir des charges de dimensions compatibles avec l'écartement des branches 34B,34C de l'arceau, sans pour autant empêcher de remplir le coffre avec une charge de volume plus important ou bien avec plusieurs charges de volume total plus important, du fait que l'arceau 34 est escamotable par recouvrement par une charge.

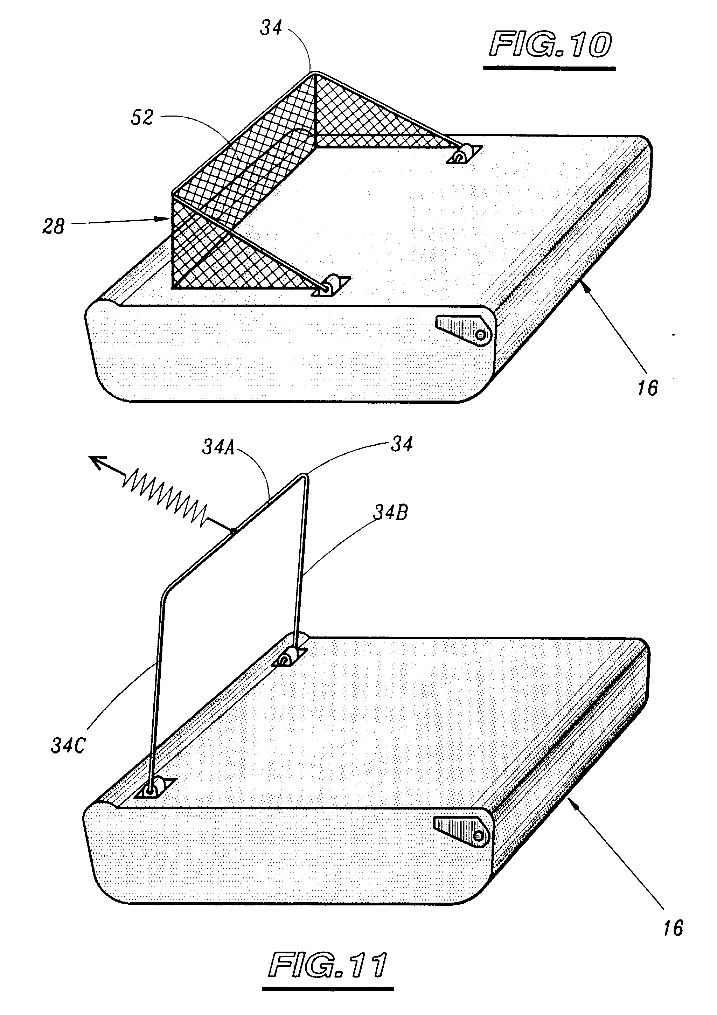

Sur la figure 10, on a représenté une variante de réalisation de la barrière 28.

Dans ce cas, la barrière 28 comporte de plus au moins un pan 52 en matériau souple ou pliable, accroché sur l'arceau 34 et la plaque 22 d'armature du dossier.

Ainsi, lorsque l'arceau 34 est érigé, la barrière 28 forme une cage pouvant retenir des charges de dimensions relativement réduites.

Le pan 52 est constitué, par exemple, par un filet ou une toile.

Sur la figure 11, on a représenté le dossier 16 rabattu d'une banquette arrière agencée, selon un second mode de réalisation de l'invention, dans l'habitacle 12 du véhicule.

Dans ce cas, l'arceau 34 est articulé sur une extrémité du dossier 16 qui, lorsque ce dernier est érigé, correspond à son extrémité supérieure. L'arceau 34 est rappelé élastiquement vers le haut du dossier 16.

En considérant le dossier 16 dans sa position rabattue, telle que représentée sur la figure 11, les branches 34B,34C de l'arceau érigé sont sensiblement verticales.

L'arceau 34 est érigé ou rabattu selon les dimensions de la charge placée dans le coffre, de façon sensiblement analogue à ce qui a été décrit pour le premier mode de réalisation de l'invention.

## Revendications

1. Agencement d'un siège (10) dans un habitacle (12) de véhicule automobile, le siège (10) comportant un dossier (16) monté articulé dans l'habitacle autour d'un axe (X) sensiblement horizontal et transversal au siège, le dossier (16) étant déplaçable entre une première position dressée sensiblement verticalement d'utilisation du siège, dans laquelle ce dossier forme une séparation entre un coffre (24) du véhicule et un espace habitable (26) de ce véhicule, et une seconde position rabattue sensiblement horizontalement d'augmentation du volume du coffre (24), caractérisé en ce que le dossier (16) comporte une barrière (28) de retenue d'une charge (30,32) placée dans le coffre (24), cette barrière (28) étant déplaçable, lorsque le dossier (16) est rabattu, entre une position active de retenue d'une charge (30), vers laquelle cette barrière est rappelée élastiquement, et une position escamotée par recouvrement par une charge (32).

2. Agencement selon la revendication 1, caractérisé en ce que, lorsque le dossier (16) est dressé, la barrière (28) est maintenue en position escamotée par appui contre une tablette (50) délimitant le dessus du coffre (24) ou contre une butée solidaire de la caisse du véhicule.

3. Agencement selon la revendication 1 ou 2, caractérisé en ce que la barrière (28) comporte un arceau (34) muni d'une âme (34A) de retenue de charge et de deux branches (34B,34C) articulées, autour d'un axe sensiblement horizontal et transversal au dossier (16), sur une face du dossier qui, lorsque ce dossier est rabattu, forme un plancher de chargement du coffre, l'arceau (34) étant, en position active, érigé par rapport au dossier (16), et, en position escamotée, plaqué contre ce dossier (16).

4. Agencement selon la revendication 3, caractérisé en ce que les extrémités libres des branches (34B,34C) de l'arceau sont pliées de manière à former des tourillons (36B,36C) articulés dans des paliers (38B,38C) portés par une plaque (22) d'armature du dossier.

5. Agencement selon la revendication 4, caractérisé en ce que le tourillon (36B) d'une première branche (34B) de l'arceau est prolongé par un crochet (42) d'accrochage d'un ressort (44) de rappel de l'arceau (34) en position active, et en ce que le tourillon (36C) de la seconde branche (34C) de l'arceau est prolongé par une butée (48) de position active de l'arceau (34) coopérant avec une butée complémentaire de la plaque (22) d'armature, le crochet (42), le ressort (44) et la butée de position active (48) s'étendant sous une face interne (22I) de la plaque d'armature.

6. Agencement selon l'une quelconque des revendications 3 à 5, caractérisé en ce qu'en considérant le dossier (16) dans sa position dressée, l'arceau (34) est articulé sensiblement à mi-hauteur de ce dossier et est rappelé élastiquement vers le bas du dossier, et en ce qu'en considérant le dossier (16) dans sa position rabattue, les branches (34B,34C) de l'arceau érigé sont inclinées suivant une pente montante vers l'avant du véhicule.

7. Agencement selon l'une quelconque des revendications 3 à 5, caractérisé en ce qu'en considérant le dossier (16) dans sa position dressée, l'arceau (34) est articulé sensiblement en haut du dossier et est rappelé élastiquement vers le haut de ce dossier, et en ce qu'en considérant le dossier (16) dans sa position rabattue, les branches (34B,34C) de l'arceau érigé sont sensiblement verticales.

8. Agencement selon l'une quelconque des revendications 3 à 7, caractérisé en ce que la barrière (28) comporte de plus au moins un pan (52) en matériau souple ou pliable, accroché sur l'arceau (34) et le dossier (16), de manière que, lorsque l'arceau (34) est érigé, la barrière (28) forme une cage de retenue de charge.

9. Agencement selon l'une quelconque des revendications 3 à 8, caractérisé en ce que l'arceau (34) est constitué par une tige métallique pliée.
